# EUROPÄISCHE PATENTSCHRIFT

(11) **EP 2 616 213 B1**
(45) Veröffentlichungstag und Bekanntmachung des Hinweises auf die Patenterteilung: **12.11.2014**
(21) Anmeldenummer: 11813666.2
(22) Anmeldetag: 15.09.2011
(51) Int. Cl.: B23Q 1/03

(54) **SPANNSYSTEM**
CLAMPING SYSTEM
SYSTÈME DE SERRAGE

(30) Priorität: 15.09.2010 DE 102010037547
(43) Veröffentlichungstag der Anmeldung: 24.07.2013
(73) Patentinhaber: ZeroClamp GmbH, 82057 Icking (DE)
(72) Erfinder: HOFMANN, Klaus, 85567 Bruck (DE)
(74) Vertreter: Mischung, Ralf
(86) Internationale Anmeldenummer: PCT/DE2011/075223
(87) Internationale Veröffentlichungsnummer: WO 2012/048701

(56) Entgegenhaltungen:
- EP-A2- 1 110 667
- WO-A1-00/67952
- DE-U1- 9 419 700

## Beschreibung

Die vorliegende Erfindung betrifft ein Spannsystem zum temporären Einspannen von Werkstücken, vorzugsweise für den Einsatz in Werkzeugmaschinen.

Zur Bearbeitung von Werkstücken in Werkzeugmaschinen werden die Werkstücke häufig am Maschinenbett befestigt. Die Befestigung kann dabei insbesondere erfolgen mittels am Werkstück befestigter Einspannkomponenten, die ihrerseits in an der Werkzeugmaschine vorgesehene Einspannmittel eingespannt werden können (als Einspannkomponenten kommen insbesondere Spannbolzen in Frage, die bspw. temporär mit dem bzw. in das Werkstück verschraubt werden, so dass im Folgenden "Spannbolzen" als spezielle Ausführungsform der "Einspannkomponenten" zu verstehen sind). Derartige Systeme haben den Vorteil, dass das temporär aus der Maschine entfernte Werkstück mit hoher Wiederhol-bzw. Lagegenauigkeit in der Werkzeugmaschine eingespannt werden kann, ohne dass zusätzliche Justierarbeiten erforderlich wären.

Aus der DE 10 2005 033 468 A1 bzw. aus der WO 2007/009439 ist ein solches Spannsystem bekannt, wobei der in diesen Schriften beschriebene Mechanismus zum Einspannen eines Fixierelements, welches der Einspannkomponente bzw. dem Spannbolzen der vorliegenden Schrift entspricht, ausdrücklich in den Offenbarungsgehalt der vorliegenden Schrift mit aufgenommen sein soll.

Häufig erfolgt die Bearbeitung von Werkstücken in mehreren Schritten, wobei die Werkstücke nach einer ersten Bearbeitung in der Werkzeugmaschine an anderer Stelle bearbeitet, insbesondere thermisch behandelt werden. Dazu wird das Werkstück aus den Einspannmitteln der Werkzeugmaschine gelöst, wobei die am Werkstück befestigten Einspannkomponenten bzw. Spannbolzen am Werkstück verbleiben oder aus ihren Befestigungsöffnungen / Gewinden am Werkstück vorübergehend entfernt werden können, um dann das Werkstück zu behandeln.

Nach erfolgter Behandlung der Werkstücke andemorts ist häufig eine weitere Bearbeitung innerhalb der bereits zuvor genutzten Werkzeugmaschine erforderlich. Dazu könnten die Werkstücke über die (wieder an ihnen befestigten) Spannbolzen wieder in die an der Werkzeugmaschine vorgesehenen Einspannmittel eingesetzt werden. Hier zeigt sich jedoch das Problem, dass insbesondere aufgrund thermischer Behandlung die Befestigungspunkte der Spannbolzen an den Werkstücken ihren Abstand zueinander verändert haben, meist im Bereich weniger Millimeter oder Millimeterbruchteile. Damit lassen sich die Spannbolzen nicht mehr in die Einspannmittel an der Werkzeugmaschine einsetzen. Das bedeutet auch, dass ein Nullpunkt, der für das Werkstück anhand eines Koordinatensystems bei derersten Bearbeitung in der Werkzeugmaschine festgelegt wurde, nach der thermischen Behandlung von seiner ursprünglichen Position abweichen kann. Zur weiteren Bearbeitung des Werkstücks in der Werkzeugmaschine ist es daher erforderlich, diese Abweichungen auszugleichen.

Weiterhin sind die aus dem Stand der Technik bekannten Einspannmittel zur Aufnahme der Spannbolzen meist in einer bestimmten vorgegebenen Rasterung des Maschinenbetts angeordnet, so dass die einzelnen Einspannmittel auf den Knotenpunkten eines ebenen Netzes mit einer Maschenweite von bspw. 200 Millimetern angeordnet sind. Werkstücke, an denen die Spannbolzen aus technischen Gründen nicht in dem entsprechenden Rastermaßabstand befestigt werden können, lassen sich daher nicht auf die gewünschte einfach Weise mittels Spannbolzen unmittelbar an der Werkzeugmaschine einspannen.

Aus der WO 00/67952 A1 ist ein schnellverstellbares Mehrfachspannsystem gemäß dem Oberbegriff von beigefügten Anspruch 1 bekannt, bei dem ein längs einer Basisschiene verschieblich positionierbarer Spannblock ein keilförmiges Spannelement trägt, welches gegen ein zu befestigendes Werkstück verspannbar ist,

Die DE 94 19 700 U1 beschreibt eine Werkzeugmaschine mit Saugspannern für plattenförmige Wesktücke, bei denen vertikal verfahrbare Saugspanner von unten gegen eine aufliegende Platte bewegt werden können.

In der EP 1 110 667 A2 wird ein Tisch mit Saugnäpfen beschrieben, wobei mehrere Saugnäpfe zeilenweise verfahrbar angeordnet und einzelne Saugnäpfe vertikal verfahrbar sind. Aufgabe der Erfindung ist es daher, ein Spannsystem zur flexiblen Befestigung und gezielten Positionierung von Werkstücken anzubieten, die mittels Einspannkomponenten der vorbeschriebenen Art zu befestigen sind.

Die Aufgabe wird gelöst durch ein Spannsystem nach Anspruch 1.

Die Erfindung geht von der Erkenntnis aus, dass das Einspannen von Werkstücken über Einspannkomponenten und die wiederholgenaue Positionierung bestimmter Werkstückpunkte erheblich vereinfacht werden kann durch eine mobile Klemmeinrichtung, deren die Einspannkomponente aufnehmende Einspannmittel um ein Maß seitlich verschiebbar sind gegenüber einem ortsfesten Positionierblock der Klemmeinrichtung. Zugleich erlaubt das erfindungsgemäße Spannsystem die weitgehend beliebige Anordnung der Klemmeinrichtungen entlang einer ersten Erstreckungsrichtung eines Basiselements, welches die Klemmeinrichtung trägt, und gestattet dadurch eine besonders flexible Befestigung der Werkstücke an der Werkzeugmaschine.

Das erfindungsgemäße Spannsystem umfasst demnach mindestens ein schienenförmig ausgebildetes Basiselement. Das Basiselement dient zur ortsfesten Anordnung an einer Werkzeugmaschine, wobei es eine das Werkstück haltende Kraft aufnimmt bzw. an das Maschinenbett überträgt. Am Basiselement ist ein Rastermaß vorgegeben, beispielsweise nach Art einer regelmäßigen Profilierung oder Zahnschiene, die sich in Längsrichtung des Basiselements erstreckt, so dass insbesondere Klemmeinrichtungen durch Eingriff in das Rastermaß entlang des Basiselements verschiebesicher positionierbar sind.

Weiterhin umfasst das erfindungsgemäße Spannsystem wenigstens zwei (vorzugsweise identische) Klemmeinrichtungen, die zur Anordnung an dem Basiselement vorgesehen sind und ihrerseits Einspannmittel zum temporären Einspannen einer Einspannkomponente (z.B. Spannbolzen) aufweisen, die mit einem Werkstück verbunden ist. Die Klemmeinrichtung umfasst einen Fixierblock, der in einer beliebig wählbaren Rastposition entlang des Rastermaßes auf dem Basiselement formschlüssig fixierbar ist. Beispielsweise kann der Fixierblock ein zum Rastermaß des Basiselements komplementäres Profil aufweisen, wobei Fixierblock und Basiselement entlang dieser Profilierung ineinander greifen können. Zur Vermeidung des unbeabsichtigten Loslösens des Fixierblocks ist dieser in einer solchermaßen gewählten Rastposition mit dem Basiselement fest verbindbar bzw. verspannbar, so dass eine Relativbewegung sicher ausgeschlossen werden kann.

Weiterhin umfasst die Klemmeinrichtung einen Positionierblock, der die Einspannmittel zum temporären Einspannen der Spannbolzen des Werkstücks aufweist. Erfindungsgemäß ist dieser Positionierblock relativ zum Fixierblock um ein geringes Verschiebemaß verschiebbar, wobei Fixierblock und Positionierblock in jeder gewählten Verschiebeposition miteinander fest verbindbar bzw. gegeneinander verspannbar sind. Zur Befestigung eines Werkstücks wird das Spannsystem gemäß einer ersten Ausführungsvariante folgendermaßen verwendet:
Das wenigstens eine Basiselement wird ortsfest an der Werkzeugmaschine angeordnet bzw. eingespannt. Auf das Basiselement werden die beiden Klemmeinrichtungen aufgesetzt, wobei der jeweilige Fixierblock jeder Klemmeinrichtung in einer vorgegebenen Rastposition entlang des Rastermaßes des Basiselements aufgesetzt und verschiebesicher verspannt wird. Die Rastposition wird zweckmäßigerweise so gewählt, dass die Einspannmittel der Klemmeinrichtungen bestmöglich auf den Abstand (im Folgenden: "Einspannabstand") zweier am Werkstück befestigter Spannbolzen angenähert wird.

Der jeweils auf dem Fixierblock aufsitzende Positionierblock jeder Klemmeinrichtung kann dann - sofern erforderlich - gegenüber dem jeweiligen Fixierblock um das noch fehlende Maß verschoben werden, um die Einspannmittel exakt auf Einspannabstand zu bewegen, wonach sie mit den jeweiligen Fixierblöcken verschiebesicher arretiert werden.

In die Einspannmittel der beiden Positionierblöcke kann nun das Werkstück eingesetzt werden, wobei die am Werkstück angeordneten Spannbolzen mit den Einspannmitteln zusammenwirken und bspw. in geeignete Ausnehmungen der Einspannmittel eingeführt und dort in bekannter Weise verspannt werden.

Damit ist das Werkstück über seine mit ihm verbundenen Spannbolzen in die beiden Positionierblöcke der jeweiligen Klemmeinrichtung eingespannt, wobei die beiden Klemmeinrichtungen ihrerseits über die jeweiligen Fixierblöcke mit dem Basiselement verspannt sind. Das Basiselement schließlich ist mit der Werkzeugmaschine bzw. dem Maschinenbett verbunden, wodurch das Werkstück relativ zu den Werkzeugen der Werkzeugmaschine eine genau definierte und bekannte Position einnimmt und entsprechend bearbeitet werden kann.

Für den Fall, dass das Basiselement seinerseits über Spannbolzen verfügt und über diese in Einspannmittel am Maschinenbett eingespannt wird, ist der eingangs genannte Fall üblich, dass die Einspannmittel meist in einer bestimmten, unveränderbaren Rasterung angeordnet sind, die für die unmittelbare Befestigung des Werkstückes oft ungeeignet ist. Für das Basiselement können dessen Spannbolzen aber erfindungsgemäß und standardmäßig genau auf diese Rasterung eingestellt bzw. entsprechend beabstandet sein. Mittels dem auf dem Basiselement vorgesehenen feineren Rastermaß (bspw. 2 mm) für den Fixierblock und der stufenlosen Verschieblichkeit zwischen Fixierblock und Positionierblock kann daher ein Werkstück mit beliebigem Einspannabstand an einem Maschinenbett befestigt werden, dessen Einspannmittel nur in einer groben Rasterung angeordnet sind. Anders gesagt: Das erfindungsgemäße Spannsystem beseitigt das Erfordernis, Spannbolzen genau in dem Einspannabstand am Werkstück anzuordnen, der durch die Rasterung vorgegeben wird, in der die Einspannmittel im Maschinenbett angeordnet sind.

Zweckmäßigerweise sind erfindungsgemäßen Einspannmittel der Klemmeinrichtungen baugleich gewählt wie diejenigen, die ortsfest und/oder in einer vorgegebenen Rasterung an einem Maschinenbett dauerhaft angeordnet sind. Dann sind auch die Spannbolzen in die ortsfesten Einspannmittel des Maschinenbetts gleichermaßen einspannbar wie in diejenigen der (demgegenüber mobilen) Klemmeinrichtungen, wobei die Spannbolzen mit einem Werkstück oder einem Basiselement verbunden sind können. Dies ergibt vorteilhaft eine größtmögliche Flexibilität zur genauen, rasterunabhängigen, wiederholbaren und justierbaren Positionierung von Werkstücken bzw. Basiselementen mit Klemmeinrichtungen.

Zur vorübergehenden Entnahme der Werkstücke empfiehlt es sich, die Einspannmittel der beiden Klemmeinrichtungen zu lösen, so dass die Spannbolzen des Werkstücks freigegeben werden, um das Werkstück aus der Werkzeugmaschine entnehmen zu können. Nach der Bearbeitung bzw. Behandlung der Werkstücke auf einer anderen Maschine kann das Werkstück der ersten Werkzeugmaschine erneut zugeführt werden, um eine weitere Bearbeitung durchzuführen, wobei sich das Werkstück mit dem erfindungsgemäßen Spannsystem wieder schnell und sicher an der Maschine befestigen lässt durch einfaches erneutes Einsetzen und Verspannen der Spannbolzen in den Einspannmitteln der Klemmeinrichtungen.

Allerdings kann das Problem auftreten, dass die mit dem Werkstück verbundenen oder erneut zu verbindenden Spannbolzen ihren Einspannabstand verändert haben, etwa auf Grund thermischer Behandlung des Werkstückes. Der Einspannabstand stimmt dann nicht mehr mit der Position der Einspannmittel der beiden Klemmeinrichtungen auf dem Basiselement an der Werkzeugmaschine überein. Zur weiteren Bearbeitung ist jedoch sowohl die stabile Befestigung des Werkstückes als auch die genaue Kenntnis der Lage des Werkstücks bzw. eines zuvor am Werkstück definierten Nullpunktes relativ zur Maschine bzw. zum Werkzeug von besonderer Bedeutung. Daher soll das Werkstück in der Werkzeugmaschine nun so positioniert werden, dass die Lage seines Nullpunktes übereinstimmt mit derjenigen vor der zwischenzeitlichen Entnahme des Werkstücks aus der Maschine.

War der Nullpunkt ursprünglich beispielsweise im Zentrum eines Werkstücks angenommen worden, so gestattet die erfindungsgemäße Vorrichtung die erneute Positionierung des Werkstückes dergestalt, dass sein Nullpunkt genau dort wieder zu liegen kommt, wo er vor der temporären Entnahme lag.

Dies geschieht erfindungsgemäß durch Verschiebung der Positionierblöcke relativ zu den Fixierblöcken der beiden Klemmeinrichtungen, erforderlichenfalls sogar durch Versetzen eines oder beider Fixierblöcke um einen oder mehrere Teilungsschritte entlang des Rastermaßes auf dem Basiselement. Hat sich z.B. der Abstand der beiden Spannbolzen am Werkstück aufgrund einer thermischen oder sonstigen Behandlung um zehn hundertstel Millimeter erhöht, und wurde der Nullpunkt des Werkstücks zunächst auf halber Strecke zwischen den beiden Einspannkomponenten definiert, so lassen sich erfindungsgemäß die beiden Positionierblöcke um jeweils fünf hundertstel Millimeter auseinander schieben. Der neue Nullpunkt fällt dann mit dem ursprünglichen Nullpunkt des Werkstücks wieder zusammen, während die Positionierblöcke mit ihren Einspannmitteln jeweils um fünf hundertstel Millimeter relativ zu den Fixierblöcken der jeweiligen Klemmeinrichtungen verschoben und in dieser neuen Lage mit dem jeweiligen Fixierblock verbunden bzw. verspannt sind. Die unterhalb der Positionierblöcke mit dem Basiselement verbundenen Fixierblöcke verändern ihre Lage in diesem Fall nicht- sie bleiben in der gewählten Rastposition fest mit dem Basiselement und der Werkzeugmaschine verbunden.

Die Verschiebbarkeit der Positionierblöcke relativ zu den jeweils zugehörenden Fixierblöcken jeder Klemmeinrichtung erlaubt also erfindungsgemäß den Ausgleich von Abstandsveränderungen der Spannbolzen des Werkstückes, wobei die Verschiebung der Positionierblöcke relativ zu den Fixierblöcken so gewählt werden kann, dass ein ursprünglich am Werkstück gewählter Ort auch nach der Abstandsveränderung der Spannbolzen in seiner Lage relativ zur Werkzeugmaschine exakt übereinstimmt.

Zweckmäßigerweise ist der maximal mögliche relative Verschiebeweg zwischen Fixierblock und Positionierblock wenigstens so groß wie die kleinste Teilung des Rastermaßes an dem Basiselement, so dass jede beliebige Position einer Klemmeinrichtung entlang des Basiselements durch Wahl der Rastposition in Verbindung mit einer Feinjustierung durch relative Verschiebung zwischen Fixierblöcken und Positionierblöcken stufenlos eingenommen werden kann. Diese besonders praktische Ausführungsform des Spannsystems sieht daher vor, dass der Verschiebeweg des Positionierblockes relativ zum Fixierblock parallel verläuft zur Längserstreckungsrichtung des Basiselements, die zugleich der Richtung des Rastermaßes bzw. der Zahnstange entspricht.

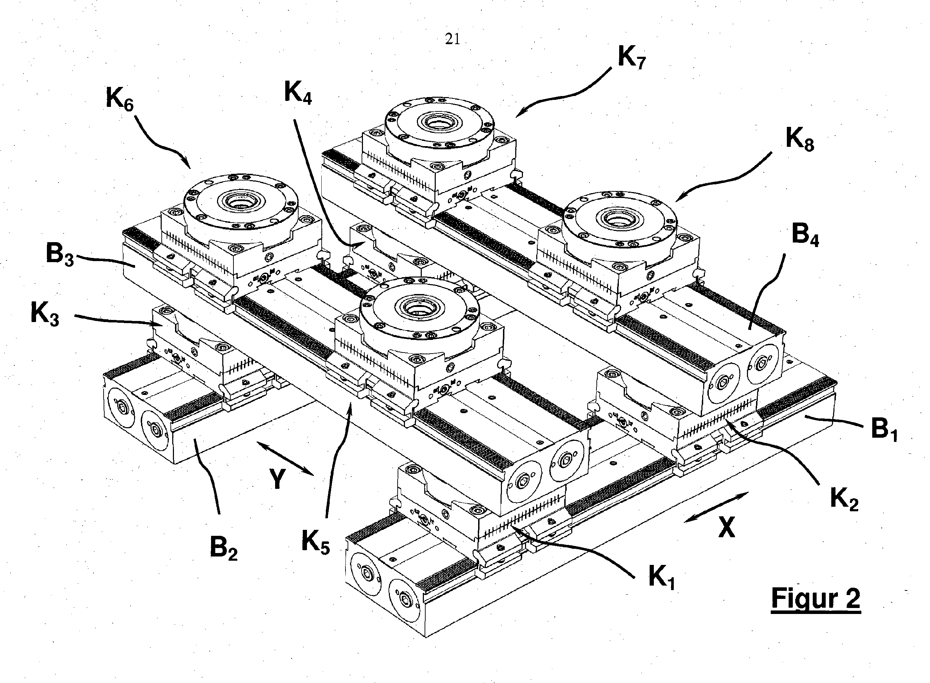

Die vorstehenden Betrachtungen bezogen sich auf eine (eindimensionale) Veränderung des Einspannabstandes zweier Spannbolzen. Häufig ist jedoch ein Werkstück über drei oder mehr nicht linear fluchtende Spannbolzen einzuspannen, wobei die Einspannkomponenten insbesondere eine Ebene aufspannen können. Längenänderungen des Werkstücks aufgrund thermischer Behandlung wirken sich dann in der Ebene aus, so dass die Position der einzelnen Spannbolzen nach der Behandlung in einer ersten X-Richtung und einer dazu senkrechten zweiten Y-Richtung zu kompensieren sind Diese Kompensation wird erfindungsgemäß möglich unter Berücksichtigung einer besonderen Eigenschaft des Basiselements. Dieses kann nach einer vorteilhaften Ausführungsform der Erfindung nicht nur unmittelbar mit einer Werkzeugmaschine bzw. einem Maschinenbett verspannt werden, sondern es kann stattdessen über an ihm angebrachte Spannbolzen seinerseits in Klemmeinrichtungen eingespannt werden, die ihrerseits bereits von einem anderen Basiselement getragen werden. So ergibt sich erfindungsgemäß und auf folgende Weise die Möglichkeit, auch ein über beispielsweise drei nicht fluchtende Spannbolzen zu befestigendes Werkstück einzuspannen bzw. hinsichtlich seines Nullpunktes korrekt auszurichten:
Wenigstens zwei Basiselemente werden (vorzugsweise parallel zueinander) an der Werkzeugmaschine befestigt bzw. eingespannt. Jedes Basiselement trägt mindestens eine Klemmeinrichtung. Ein drittes Basiselement, welches an seiner Unterseite zwei geeignete Einspannkomponenten (bspw. in Form von Spannbolzen) aufweist, wird mit diesen Einspannkomponenten jeweils in eine auf dem ersten bzw. zweiten Basiselement angeordnete Klemmeinrichtung eingesetzt und bildet auf diese Weise eine Art Brücke vom ersten zum zweiten Basiselement. Auf diesem dritten Basiselement könnten nun zwei weitere Klemmeinrichtungen im Abstand zueinander angeordnet werden, die zwei der drei Spannbolzen des Werkstücks aufnehmen sollen. Der dritte Spannbolzen des Werkstücks könnte in eine weitere Klemmeinrichtung eingespannt werden, die auf dem ersten oder zweiten Basiselement und in einem Abstand zum dritten Basiselement angeordnet ist. Alternativ wäre es auch möglich, ein zusätzliches viertes Basiselement in gleicher Weise wie das dritte Basiselement als Brücke zwischen dem ersten und zweiten Basiselement vorzusehen, wobei dann auf dem vierten Basiselement wenigstens eine weitere Klemmeinrichtung zur Aufnahme des dritten Spannbolzens des Werkstücks vorzusehen wäre (siehe hierzu insbesondere Fig. 2).

Durch die erfindungsgemäß vorgesehene Möglichkeit, mehrere Basiselemente durch dazwischen liegende Klemmeinrichtungen miteinander zu verspannen, lassen sich Dehnungen des Werkstücks auch in mehreren Richtungen des Raumes ausgleichen durch geeignete Relativverschiebung der Positionierblöcke bzw. Fixierblöcke, die zwischen den übereinander liegenden Basiselementen angeordnet sind und/oder Verschiebung derjenigen Klemmeinrichtungen, die auf den "Brücken" sitzen und unmittelbar die Spannbolzen des Werkstückes aufnehmen.

Diese Weiterentwicklung des Spannsystems sieht vor, dass an den Basiselementen Spannbolzen befestigbar sind, die in gleicher Weise von den (mobilen) Klemmeinrichtungen einspannbar sind wie diejenigen Spannbolzen, die am Werkstück befestigt werden (zweckmäßigerweise sind die Spannbolzen sogar identisch ausgeführt). Dadurch können in den Klemmeinrichtungen wahlweise Werkstücke oder Basiselemente eingespannt werden, wobei letztere wiederum Klemmeinrichtungen tragen können. Vorteilhafterweise sind also die erfindungsgemäßen Einspannmittel der Klemmeinrichtungen baugleich gewählt wie diejenigen, die ortsfest und/oder in einer vorgegebenen Rasterung an einem Maschinenbett dauerhaft angeordnet sind. Dann sind auch die Spannbolzen in die ortsfesten Einspannmittel des Maschinenbetts gleichermaßen einspannbar wie in diejenigen der (demgegenüber mobilen) Klemmeinrichtungen, wobei die Spannbolzen mit einem Werkstück oder einem Basiselement verbunden sind können. Dies ergibt vorteilhaft eine größtmögliche Flexibilität zur genauen, rasterunabhängigen, wiederholbaren und justierbaren Positionierung von Werkstücken bzw. Basiselementen mit Klemmeinrichtungen.

Nach einer weiteren vorteilhaften Ausführungsform der Erfindung umfasst das Spannsystem wenigstens drei Basiselemente, wobei die Längserstreckungsrichtungen wenigstens zweier dieser Basiselemente miteinander einen Winkel von α ≠ 0° einschließen. Eine solche Anordnung beschreibt den zuvor genannten speziellen Fall der "Brückenkonstruktion" in allgemeinerer Form. Denkbar ist hierbei nämlich auch der Fall, dass wenigstens drei Basiselemente in einer gemeinsamen Ebene angeordnet sind, wobei ihre Längserstreckungsrichtungen z.B. sternförmig auseinander laufen und dabei einen Winkel von jeweils 120° miteinander bilden. Anders als im vorher geschilderten Fall könnte hierbei ein durch drei Klemmeinrichtungen zu tragendes Werkstück mit jeweils einem Spannbolzen in einer Klemmeinrichtung eingespannt sein, die ihrerseits auf jeweils einem Basiselement aufsitzt (drei Einspannpunkte für das Werkstück, dementsprechend drei Klemmeinrichtungen, jede Klemmeinrichtung auf einem eigenen Basiselement). Je nach Anforderung kann diese Anordnung zweckmäßiger sein als diejenige, wonach zwei der drei Spannbolzen über zwei Klemmeinrichtungen eingespannt werden, die gemeinsamen auf einem Basiselement aufsitzen, während nur die dritte Klemmeinrichtung über ein separates Basiselement gestützt wird.

So könnte etwa ein rotationssymmetrischer Körper (Zahnrad oder ähnliches) mit in seinem Zentrum definierten Nullpunkt auf drei in einer Ebene und unter einem Winkel von 120° zueinander angeordneten Basiselementen über jeweils eine Klemmeinrichtung eingespannt sein. Homogene Dehnungseffekte lassen sich dann sehr einfach ausgleichen durch Relativverschiebung der jeweiligen Positionierblöcke gegenüber den Fixierblöcken jeder Klemmeinrichtung in identischem Maß, so dass die Lage des Nullpunkts des Werkstücks wieder übereinstimmt (und mit dem Schnittpunkt der drei Längserstreckungsrichtungen der Basiselemente zusammenfällt).

Es ist leicht ersichtlich, dass durch die verschiedenen Kombinationsmöglichkeiten der Basiselemente mit den Klemmeinrichtungen unterschiedlichste Einspannaufgaben bewältigt werden können. Wenn die Basiselemente ihrerseits mit Spannbolzen versehen werden, die zum Einspannen in die (mobilen) Klemmeinrichtung geeignet sind, lassen sich die das Werkstück tragenden Klemmeinrichtungen weitgehend beliebig relativ zur Werkzeugmaschine positionieren durch "Dazwischenschaltung" eines oder mehrerer Basiselemente, und dadurch auf die Geometrie des jeweiligen Werkstückes optimal anpassen.

Der Vorteil wird besonders deutlich dann, wenn das Maschinenbett bzw. die Werkzeugmaschine mehrere, vorzugsweise rasterartig angeordnete Einspannmittel aufweist, die zur Aufnahme der identischen Spannbolzen geeignet sind, wie sie auch in die zuvor beschriebenen Klemmeinrichtungen einsetzbar sind. Da das üblicherweise grobe Raster der Werkzeugmaschine nur wenige und ortsfeste Einspannmittel vorsieht (beispielsweise 4 x 4 oder 5 x 5), erlaubt diese Rasterung nicht immer die unmittelbare Befestigung der Werkstücke an den maschinenseitigen Einspannmitteln, weil die Werkstückgeometrie nur eine von diesen Maschinenrastern abweichenden Anordnung der Spannbolzen am Werkstück gestattet.

Durch Einsatz des erfindungsgemäßen Spannsystems wird die Limitierung auf diese grobe Rasterung beseitigt, wenn die an den Basiselementen befestigten Spannbolzen dieser Rasterung entsprechen, ihrerseits aber die weitgehend beliebige Positionierung von Klemmeinrichtungen gestattet, die entlang des auf den Basiselementen vorgesehenen Rastermaßes erheblich feiner positioniert werden können. Durch die darüber hinaus erfindungsgemäß vorgesehene Verschiebbarkeit der Positionierblöcke gegenüber den Fixierblöcken der Klemmeinrichtungen lassen sich die Positionen der Einspannmittel zur Aufnahme der am Werkstück befestigten Spannbolzen nahezu beliebig und optimal wählen.

Eine besonders vorteilhafte Ausführungsform des erfindungsgemäßen Spannsystems sieht vor, dass die Klemmeinrichtung über ein Fluid betätigbar sind, bei dem es sich insbesondere um Druckluft handeln kann. Zweckmäßigerweise geben die Klemmeinrichtungen unter Druckluftbeaufschlagung einen in sie eingesetzten Spannbolzen frei, während im drucklosen Zustand der Spannbolzen fest in die Klemmeinrichtung eingezogen bzw. eingespannt wird. Um derartige Klemmeinrichtungen mit dem zur Betätigung erforderlichen Fluid versorgen zu können, sehen die Basiselemente in diesem Fall wenigstens einen Kanal vor, über den das Fluid - bspw. über das Maschinenbett zugeführt - an die auf dem Basiselement aufsitzenden Klemmeinrichtungen weitergeleitet werden kann. Zweckmäßigerweise sind die Kanäle dort verschließbar, wo ungewolltes Ausströmen zu verhindern ist. Durch entsprechende Zuführung des Fluids in die Basiselemente können dann die auf den Basiselementen aufsitzenden Klemmeinrichtungen zum Einspannen bzw. zur Freigabe der in sie hineinragenden Einspannkomponenten veranlasst werden.

Wie aus einer der vorbeschriebenen Ausführungsformen deutlich wurde, sind die Basiselemente ihrerseits zur Befestigung an den Klemmeinrichtungen vorgesehen, in dem die Basiselemente mit daran angeordneten Spannbolzen in die Einspannmittel der Klemmeinrichtungen eingesetzt werden. Um die auf einem solchen Basiselement wiederum aufsitzenden Klemmeinrichtungen ihrerseits mit dem Betätigungsfluid versorgen zu können, ist es nach einer weiteren Ausführungsform der Erfindung vorgesehen, dass auch die Klemmeinrichtungen wenigstens einen Kanal zur Weiterleitung des Fluids an in die Klemmeinrichtungen einzuspannende Basiselemente aufweisen. Dann kann das Betätigungsfluid von einer Klemmeinrichtung an das vom ihr getragene bzw. verspannte Basiselement weitergeleitet werden. Insbesondere in Zusammenschau mit Fig. 2 wird der erfindungsgemäße Gedanke deutlich, dass das Betätigungsfluid sowohl durch die Basiselemente als auch durch die Klemmeinrichtungen erforderlichenfalls hindurch geleitet werden kann, um weitere Basiselemente bzw. Klemmeinrichtungen damit zu versorgen. Zweckmäßigerweise sind die einzelnen Kanäle bei Bedarf absperrbar, etwa um den Austritt des Fluids aus einer nicht durch ein Basiselement belegten Klemmeinrichtung zu verhindern.

Weitere vorteilhafte Ausführungsformen ergeben sich aus den Unteransprüchen.

Nachfolgend sollen zwei Ausführungsformen des erfindungsgemäßen Spannsystems näher beschrieben werden. Dabei zeigt
- Fig. 1: eine erste vereinfachte Variante mit einem Basiselement und zwei Klemmeinrichtungen, sowie
- Fig. 2: eine komplexere Ausführungsform mit vier Basiselementen und acht Klemmeinrichtungen zur zweidimensionalen Lagekorrektur.

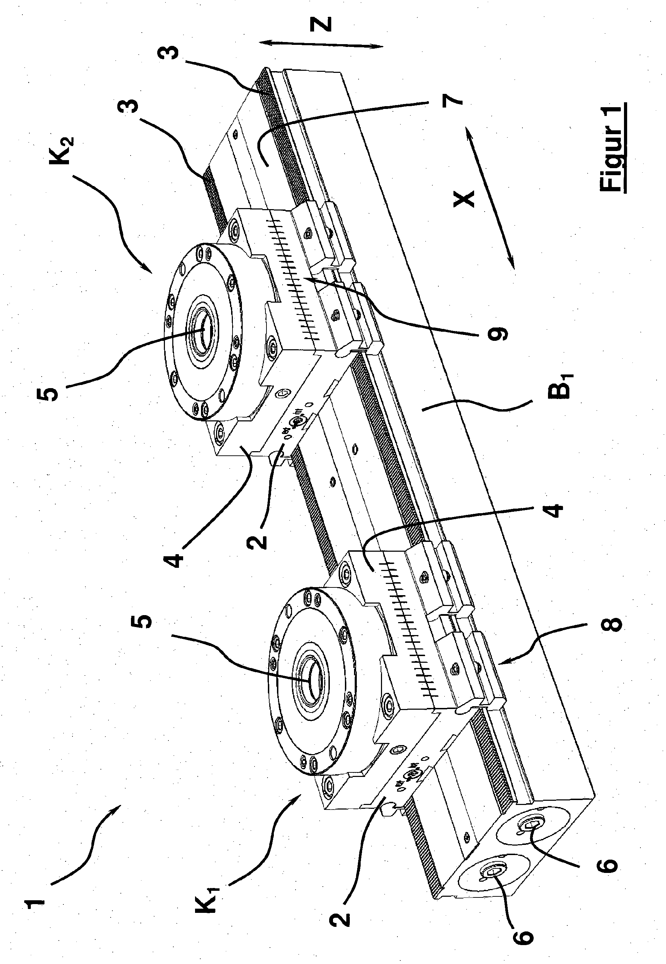

Fig. 1 zeigt in perspektivischer Darstellung die wesentlichen Elemente eines erfindungsgemäßen Spannsystems. Ein schienenförmiges Basiselement B₁ erstreckt sich mit seiner quaderförmigen, länglichen Kontur entlang einer ersten Richtung X. Obwohl in Fig. 1 nicht dargestellt, könnte das Basiselement B₁ mit an seiner Unterseite befestigten Spannbolzen mit den Einspannmitteln einer Werkzeugmaschine ortsfest montiert bzw. eingespannt sein, um daran ein Werkstück zu befestigen.

Das Basiselement B₁ weist auf seiner Oberseite zwei parallel zueinander über die Länge des Basiselements B₁ geführte Rastermaße 3 auf, die ein zahnstangenartiges Profil haben und in X-Richtung verlaufen.

Zwischen den beiden Rastermaßen 3 bietet das Basiselement B₁ eine im Wesentlichen ebene Auflagefläche 7 zur Auflage von Klemmeinrichtungen, von denen in Fig. 2 eine erste Klemmeinrichtung K₁ und eine zweite, identische Klemmeinrichtung K₂ dargestellt sind. Die Klemmeinrichtung K₁ umfasst zwei aneinander liegende, im Wesentlichen quaderförmige Blöcke (die weiteren Klemmeinrichtungen K₂...K₈ der Figurenbeispiele sind in dieser Ausführungsform identisch ausgebildet zur ersten Klemmeinrichtung K₁ und werden im Folgenden diesbezüglich nicht näher beschrieben). Der untere der beiden Blöcke der Klemmeinrichtung K₁ ist als Fixierblock mit seiner Unterseite auf die obere Kontaktfläche 7 des Basiselements B₁ aufgelegt. An zwei gegenüber liegenden Randbereichen der Unterseite des Fixierblocks 2 ist jeweils ein (in den Figuren nicht zu sehendes) Rastprofil vorgesehen, welches komplementär zum jeweiligen Rastermaß 3 des Basiselements 1 ausgebildet ist, so dass der Fixierblock 2 bei der Auflage auf dem Basiselement B₁ vordefinierte Rastpositionen in X-Richtung einnimmt. Zur lagesicheren Positionierung des Fixierblockes 2 auf dem Basiselement B₁ umfasst der Fixierblock 2 vier lösbare Klemmbügel 8, die das Basiselement B₁ im Bereich der Rastermaße 3 hintergreifen und dadurch ein unbeabsichtigtes Lösen des Fixierblocks 2 in Z-Richtung verhindern. In Fig. 1 sind die beiden Fixierblöcke 2 der beiden Klemmeinrichtungen K₁ und K₂ auf diese Weise fest mit dem Basiselement B₁ verspannt.

Auf dem Fixierblock 2 eines jeden Klemmelements K₁...K₈ sitzt jeweils ein Positionierblock 4, der entlang geeigneter Führungsmittel gegenüber dem jeweiligen Fixierblock 2 um ein Maß in X-Richtung verschiebbar ist. Der maximale relative Verschiebeweg zwischen Fixierblock und darauf aufsitzendem Positionierblock entspricht in diesem Ausführungsbeispiel der Teilung des Rastermaßes 3, die beispielsweise zwei Millimeter beträgt. In der beliebig wählbaren Verschiebeposition des Positionierblocks 4 relativ zum Fixierblock 2 lässt sich der Positionierblock 4 über nicht näher dargestellte Verbindungsmittel fest mit dem Fixierblock 2 verbinden, also in der gewählten Verschiebeposition fixieren. Zur genauen Einstellung der gewünschten Verschiebeposition ist ein am Klemmelement K₂ beispielhaft bezifferter Nonius 9 vorgesehen.

Jeder Positionierblock 4 umfasst Einspannmittel 5 zum Einspannen bzw. zur Freigabe eines Spannbolzens, der allgemeiner als "Einspannkomponente" bezeichnet werden kann, und der insbesondere mit einem Werkstück verbunden sein kann (etwa durch Verschraubung in ein am Werkstück geeignet angeordnetes Gewinde). Als Einspannkomponente kommt insbesondere ein Spannbolzen mit stellenweise reduziertem Durchmesser infrage, der in die kreisförmige Ausnehmung der Einspannmittel 5 eingesetzt und einspannbar ist, in dem nicht näher dargestellte Fixiermittel in den Abschnitt mit reduziertem Bolzendurchmesser eingreifen, um den Bolzen in seiner Lage zu fixieren oder gegen einen Anschlag vorzuspannen, wie dies im eingangs genannten Stand der Technik beschrieben ist.

Zur temporären Befestigung eines Werkstücks mit Hilfe des Spannsystems gemäß Fig. 1 sind die mit dem Werkstück verbundenen Spannbolzen in die beiden Ausnehmungen der Einspannmittel 5 der Klemmvorrichtungen K₁ und K₂ einzusetzen und zu verspannen. Durch verschiebesicheres Verspannen des jeweiligen Positionierblockes mit dem darunter liegenden Fixierblock bei gleichzeitig erfolgter Fixierung des Fixierblockes 2 an dem Basiselement B₁ ist das von zwei Einspannkomponenten getragene Werkstück für eine Bearbeitung in der Werkzeugmaschine sicher und stabil positionierbar, wobei der Einspannabstand der Bolzen mittels Rastermaß und Verschiebemöglichkeit des Positionierblockes frei gewählt werden kann.

Die Einspannmittel 5 eines jeden Klemmelements K₁...K₈ sind pneumatisch betätigbar. Zu diesem Zweck verfügt das Basiselement B₁ über zwei Kanäle 6, die für die Zufuhr einer Betätigungsluft und/oder einer zu Überwachungszwecken verwendeten Steuerluft zu den Klemmeinrichtungen K₁...K₈ hin ausgeführt sind. Durch geeignet positionierte und bei Bedarf individuell verschließbare Öffnungen an der Oberseite 7 des Basiselements B₁ kann die Betätigungsluft den auf dem Basiselement B₁ aufsitzenden Klemmeinrichtungen K₁, K₂ gezielt zugeführt werden, um das Einspannen bzw. das Loslösen der in die Einspannmittel 5 eingesetzten Einspannkomponenten zu ermöglichen. Darüber hinaus verfügt jede Klemmeinrichtung K₁...K₈ über wenigstens einen Kanal zur Weiterleitung der Betätigungsluft an solche Basiselemente, die ihrerseits mittels an ihnen befestigten Spannbolzen in die Einspannmittel 5 der Klemmelemente K₁...K₈ eingesetzt werden. Auf diese Weise wird sichergestellt, dass die Betätigungsluft bei Bedarf durch ein erstes Basiselement bis in eine darauf aufsitzende Klemmeinrichtung und durch diese Klemmeinrichtung hindurch bis zu einem weiteren, von der Klemmeinrichtung gehaltenen nächsten Basiselement geleitet werden kann, um eine wiederum auf diesem weiteren Basiselement aufsitzende Klemmeinrichtung mit der Betätigungs- bzw. Steuerluft versorgen zu können.

Sofern sich der Abstand der beiden Spannbolzen am Werkstück aufgrund einer zwischenzeitlichen externen Bearbeitung verändert hat, lässt sich das Werkstück in die zunächst unveränderte Anordnung der beiden Klemmeinrichtungen K₁, K₂, gemäß Fig. 1 nicht einsetzen, da die Abstände der Einspannmittel 5 mit den neuen Abständen der Spannbolzen nicht mehr übereinstimmen. Erfindungsgemäß lassen sich jedoch die Einspannmittel 5 zusammen mit den sie tragenden Positionierblöcken 4 relativ zu den jeweils darunter angeordneten Fixierblöcken 2 um ein Maß verschieben. Dazu wäre die Verspannung zwischen Positionierblock und Fixierblock vorübergehend zu lösen. Dann lassen sich die Einspannmittel 5 wenigstens einer, erforderlichenfalls auch beider Klemmeinrichtungen K₁, K₂ in X-Richtung so verschieben, dass der Abstand der Einspannmittel 5 nun mit dem neuen Abstand der Spannbolzen am Werkstück übereinstimmt. Zugleich kann die Verschiebeposition der Einspannmittel so gewählt werden, dass ein vor der zwischenzeitlichen externen Behandlung am Werkstück definierter Nullpunkt wieder an gleicher Stelle zu liegen kommt, wodurch die Einstellung der Daten für die weitere Bearbeitung des Werkstücks in der Werkzeugmaschine erheblich vereinfacht wird. Haben die Einspannmittel 5 ihre solchermaßen gewünschte Verschiebeposition erreicht, so sind die Positionierblöcke 4 wieder gegen die Fixierblöcke 2 zu verspannen, wonach das in die Klemmeinrichtungen K₁ und K₂ einzusetzende Werkstück lagesicher und mit genau bekannter Position an der Werkzeugmaschine befestigt und damit für die Bearbeitung bereit gestellt werden kann.

Fig. 2 zeigt eine Weiterentwicklung des erfindungsgemäßen Spannsystems, bei dem Abstandskorrekturen für Spannbolzen nicht nur in X-, sondern auch in Y-Richtung vorgenommen werden können. Zu sehen sind zwei Basiselemente B₁ und B₂, die parallel zueinander am (nicht dargestellten) Maschinenbett befestigt sein sollen. Jedes Basiselement B₁, B₂ trägt je zwei Klemmeinrichtungen K₁, K₂ bzw. K₃, K₄. Zwei weitere Basiselemente B₃ und B₄ erstrecken sich rechtwinklig zu den Basiselementen B₁ und B₂ und sind mit Hilfe von an ihrer Unterseite angeordneten Spannbolzen jeweils in ein Klemmelement K₁, K₃ bzw. K₂, K₄ der beiden unteren Basiselemente B₁, B₂ eingespannt. Die (in Fig. 2 nicht näher bezeichneten) Positionierblöcke der Klemmeinrichtungen K₁ bis K₄ lassen sich dabei - analog zur vereinfachten Ausführungsform gemäß Fig. 1 - in X-Richtung relativ zu den jeweiligen Fixierblöcken verschieben, wobei in diesem Fall auch die an den Positionierblöcken befestigten oberen Basiselemente B₃ und B₄ in gleicher Weise bewegt werden.

Die quer zu den unteren Basiselementen B₁ und B₂ angeordneten oberen Basiselemente B₃ und B₄ tragen ihrerseits jeweils zwei Klemmeinrichtungen K₅, K₆ bzw. K₇, K₈. Übereinstimmend mit der Erstreckungsrichtung Y für die beiden oberen Basiselemente B₃, B₄ lassen sich die Positionierblöcke der oberen Klemmeinrichtungen K₅ ...K₈ relativ zu ihren Fixierblöcken in Y-Richtung verschieben.

Die Einspannmittel der vier oberen Klemmeinrichtungen K₅...K₈ sind zur Aufnahme jeweils eines (nicht dargestellten) Spannbolzens vorgesehen, wobei alle Spannbolzen gemeinsam an einem (ebenfalls nicht dargestellten) Werkstück befestigt sind. Durch Einsetzen der Spannbolzen in die oberen Klemmeinrichtungen K₅...K₈ und Betätigung der Klemmeinrichtungen lässt sich das Werkstück sicher und ortsfest an der Werkzeugmaschine befestigen. Die Betätigung der Klemmelemente kann erfolgen mittels Druckluft, die über Kanäle in den Basiselementen bzw. den Klemmelementen weitergeleitet wird bis hinauf zu den Einspannmitteln der oberen vier Klemmelemente K₅...K₈.

Ein zur externen Behandlung vorübergehend aus der Werkzeugmaschine entnommenes Werkstück lässt sich durch das in Fig. 2 dargestellte erfindungsgemäße Spannsystem auch dann wieder in der Werkzeugmaschine sicher einspannen, wenn aufgrund der externen Behandlung der Abstand der mit dem Werkstück verbundenen Spannbolzen verändert wurde. Durch Verschiebung einiger oder aller Positionierblöcke gegenüber den jeweiligen Fixierblöcken an den Klemmeinrichtungen K₁...K₈ lassen sich die Einspannmittel sowohl in X- als auch in Y-Richtung so neu positionieren und wieder fixieren, dass die Spannbolzen des Werkstückes nun wieder exakt in die oberen Klemmeinrichtungen K₅...K₈ eingesetzt werden können. Weiterhin gestattet das erfindungsgemäße Spannsystem dabei die Positionierung des Werkstückes derart, dass ein zuvor am Werkstück definierter Nullpunkt wieder an der gleichen Stelle zu liegen kommt, selbst wenn das Werkstück aufgrund der externen Behandlung seine äußeren Abmaße und damit seinen Einspannabstand in X- und/oder Y-Richtung verändert hat. Die Lage des Nullpunktes kann dabei frei gewählt sein und z.B. im Zentrum einer der Klemmeinrichtungen bzw. in der Achse des zugehörigen Spannbolzens definiert werden. Diese Klemmeinrichtung könnte nach der thermischen Behandlung ihre Position als alter und neuer Nullpunkt unverändert beibehalten, während die anderen Klemmeinrichtungen zur Berücksichtigung der Längenänderung entsprechend zu justieren wären. Selbstverständlich kann der Nullpunkt auch zwischen den das Werkstück tragenden Klemmeinrichtungen definiert sein, wobei nach der externen Behandlung möglicherweise alle Klemmeinrichtungen neu auszurichten wären.

Obwohl die Basiselemente in Fig. 2 im Wesentlichen rechtwinklig zueinander angeordnet sind, gestattet das erfindungsgemäße Spannsystem eine beliebige Ausrichtung der Basiselemente zueinander, um den Anforderungen bzw. Anordnungen der Spannbolzen an den jeweiligen Werkstücken bestmöglich gerecht zu werden.

Obwohl die unmittelbare Befestigung der Werkstücke über Spannbolzen an den Klemmeinrichtungen einen üblichen Anwendungsfall darstellt, ist es auch denkbar, mehrere Werkstücke gemeinsam auf einem Werkstückträger zu fixieren, und diesen über daran angeordneten Spannbolzen in die Klemmeinrichtungen einzusetzen und zu verspannen.

## Patentansprüche

1. Spannsystem (1) zum temporären Einspannen von Werkstücken
a) mit mindestens einem schienenförmig ausgebildeten Basiselement (B₁, B₂,...) und mit mindestens zwei Klemmeinrichtungen (K₁, K₂, K₃...),
b) wobei die Klemmeinrichtungen (K₁, K₂, K₃...) einen Fixierblock (2) aufweisen, der in Rastpositionen entlang eines am Basiselement (B₁, B₂,...) vorgegebenen Rastermaßes (3) auf dem Basiselement (B₁, B₂,...) formschlüssig fixierbar ist,
c) wobei wenigstens eine Klemmeinrichtung (K₁, K₂, K₃...) einen Positionierblock (4) aufweist,
d) wobei der Positionierblock (4) relativ zum Fixierblock (2) und entlang eines Verschiebeweges verschiebbar ist.
**dadurch gekennzeichnet,**
e) **dass** der Positionierblock (4) Einspannmittel (5) zum temporären Einspannen einer Einspannkomponente aufweist, die mit einem Werkstück oder einem weiteren Basiselement (B₁, B₂...) verbunden ist, und der Positionierblock (4) in jeder gewählten Verschiebeposition entlang des Verschiebeweges mit dem Fixierblock (2) temporär verspannbar ist, wobei der Verschiebeweg des Positionierblockes (4) relativ zum Fixierblock parallel verläuft zur Längserstreckungsrichtung des Basiselements (B₁).

2. Spannsystem nach Anspruch 1, **dadurch gekennzeichnet, dass** die Einspannkomponente ein Spannbolzen ist, welcher mit einem Werkstück oder einem Basiselement verbunden ist.

3. Spannsystem nach Anspruch 1 oder 2, **dadurch gekennzeichnet, dass** der maximale Verschiebeweg mindestens der kleinsten Teilung des Rastermaßes (3) entspricht.

4. Spannsystem nach einem der vorigen Ansprüche, **dadurch gekennzeichnet, dass** wenigstens zwei Basiselemente (B₁, B₂,...) vorgesehen sind, von denen jedes mindestens eine Klemmeinrichtung (K₁, K₂, K₃...) trägt, um ein Werkstück gleichzeitig an den wenigstens zwei Basiselementen (B₁, B₂,...) zu befestigen.

5. Spannsystem nach einem der vorigen Ansprüche, **dadurch gekennzeichnet, dass** wenigstens zwei erste, vorzugsweise parallel angeordnete Basiselemente (B₁, B₂,...) vorgesehen sind, von denen jedes mindestens eine Klemmeinrichtung (K₁, K₂) trägt, wobei wenigstens ein weiteres Basiselement (B₃) eingespannt ist in jeweils eine auf dem ersten und auf dem zweiten Basiselement (B₁, B₂) angeordnete Klemmeinrichtung (K₁, K₂).

6. Spannsystem nach einem der vorigen Ansprüche mit wenigstens drei Basiselementen (B₁, B₂, B₃), **dadurch gekennzeichnet, dass** die Längserstreckungsrichtungen wenigstens zweier dieser Basiselemente (B₁, B₂, B₃) miteinander einen Winkel α ≠ 0° bilden.

7. Spannsystem nach einem der vorigen Ansprüche, **dadurch gekennzeichnet, dass** die Klemmeinrichtungen (K₁, K₂) über ein Fluid, vorzugsweise Druckluft, betätigbar sind.

8. Spannsystem nach dem vorhergehenden Anspruch, **dadurch gekennzeichnet, dass** die Basiselemente (B₁, B₂, B₃) wenigstens einen Kanal zur Zuführung des Fluids an die auf den Basiselementen (B₁, B₂, B₃) anzuordnenden Klemmeinrichtungen (K₁, K₂) aufweist.

9. Spannsystem nach einem der beiden vorhergehenden Ansprüche, **dadurch gekennzeichnet, dass** die Klemmeinrichtungen (K₁, K₂) wenigstens einen Kanal zur Weiterleitung des Fluids an in die Klemmeinrichtungen (K₁, K₂) einzuspannende Basiselemente (B₃, B₄) aufweisen.

## Claims

1. Clamping system (1) for the temporary clamping of workpieces
a) with at least one base element (B₁, B₂,...) designed in the form of a track, and with at least two clamping devices (K₁, K₂, K₃...),
b) wherein the clamping devices (K₁, K₂, K₃...) have an affixing block (2), which can be affixed on the base element (B₁, B₂,...) in a form-locking manner in lock-in positions along a grid spacing (3) prespecified on the base element (B₁, B₂,...),
c) wherein at least one clamping device (K₁, K₂, K₃...) has a positioning block (4),
d) wherein the positioning block (4) can be moved relative to the affixing block (2) and along a movement path,
characterized
e) in that the positioning block (4) has clamping means (5) for the temporary clamping of a clamping component, which is connected with a workpiece or another base element (B₁, B₂...), and the positioning block (4) can be temporarily clamped in any selected movement position along the movement path with the affixing block (2), the movement path of the positioning block (4) relative to the affixing block running parallel to the longitudinal extension direction of the base element (B₁).

2. Clamping system according to claim 1, **characterized in that** the clamping component is a clamping bolt, which is connected with a workpiece or a base element.

3. Clamping system according to claim 1 or 2, **characterized in that** the maximum movement path corresponds at least to the smallest division of the grid spacing (3).

4. Clamping system according to one of the previous claims, **characterized in that** at least two base elements (B₁, B₂,...) are provided, of which each carries at least one clamping device (K₁, K₂, K₃...) so as to simultaneously fasten one workpiece on the at least two base elements (B₁, B₂,...).

5. Clamping system according to one of the previous claims, **characterized in that** at least two first, preferably parallel, base elements (B₁, B₂,...) are provided, of which each carries at least one clamping device (K₁, K₂), wherein at least one other base element (B₃) is clamped into a respective clamping device (K₁, K₂) arranged on the first and on the second base element (B₁, B₂).

6. Clamping system according to one of the previous claims with at least three base elements (B₁, B₂, B₃), **characterized in that** the longitudinal extension directions of at least two of these base elements (B₁, B₂, B₃) form an angle α ≠ 0° with one another.

7. Clamping system according to one of the previous claims, **characterized in that** the clamping devices (K₁, K₂) can be actuated via a fluid, preferably, compressed air.

8. Clamping system according to the preceding claim, **characterized in that** the base elements (B₁, B₂, B₃) has at least one channel for the supply of the fluid to the clamping devices (K₁, K₂) to be arranged on the base elements (B₁, B₂, B₃).

9. Clamping system according to one of the two preceding claims, **characterized in that** the clamping devices (K₁, K₂) have at least one channel for the further conducting of the fluid to base elements (B₃, B₄), which are to be clamped into the clamping devices (K₁, K₂).

## Revendications

1. Système de serrage (1) pour le serrage temporaire de pièces à usiner
a) comportant au moins un élément de base (B₁, B₂...), configuré en forme de rail, et au moins deux dispositifs de serrage (K₁, K₂, K₃...),
b) les dispositifs de serrage (K₁, K₂, K₃...) comportant un bloc de fixation (2), qui en position d'encliquetage peut être fixé par liaison de forme sur l'élément de base (B₁, B₂...) le long d'une crémaillère d'encliquetage (3) prédéfinie sur l'élément de base (B₁, B₂...),
c) au moins un dispositif de serrage (K₁, K₂, K₃...) comportant un bloc de positionnement (4),
d) le bloc de positionnement (4) pouvant se déplacer par rapport au bloc de fixation (2) et le long d'un chemin de déplacement,
**caractérisé en ce que**
e) le bloc de positionnement (4) comprend des moyens de serrage (5) pour le serrage temporaire d'un composant de serrage qui est relié à une pièce à usiner ou à un élément de base supplémentaire (B₁, B₂...), et que le bloc de positionnement (4) peut être temporairement serré contre le bloc de fixation (2) sur toute position de déplacement sélectionnée le long du chemin de déplacement, le chemin de déplacement du bloc de positionnement (4) courant, par rapport au bloc de fixation, parallèlement à la direction de l'étendue longitudinale de l'élément de base (B₁).

2. Système de serrage selon la revendication 1, **caractérisé en ce que** le composant de serrage est un boulon de serrage, qui est relié à une pièce à usiner ou à un élément de base.

3. Système de serrage selon la revendication 1 ou 2, **caractérisé en ce que** le chemin de déplacement maximal correspond au moins au pas le plus petit de la crémaillère d'encliquetage (3).

4. Système de serrage selon l'une des revendications précédentes, **caractérisé en ce qu'**au moins deux éléments de base (B₁, B₂...) sont prévus, dont chacun porte au moins un dispositif de serrage (K₁, K₂, K₃...), pour fixer une pièce à usiner simultanément aux au moins deux éléments de base (B₁, B₂...).

5. Système de serrage selon l'une des revendications précédentes, **caractérisé en ce que** sont prévus au moins deux premiers éléments de base (B₁, B₂...) disposés de préférence parallèlement, dont chacun porte au moins un dispositif de serrage (K₁, K₂), au moins un élément de base supplémentaire (B₃) étant serré dans des dispositifs de serrage (K₁, K₂) disposés sur respectivement l'un sur le premier élément et l'autre sur le deuxième élément de base (B₁, B₂).

6. Système de serrage selon l'une des revendications précédentes, comportant au moins trois éléments de base (B₁, B₂, B₃), **caractérisé en ce que** les directions de l'étendue longitudinale d'au moins deux de ces éléments de base (B₁, B₂, B₃) font entre elles un angle α ≠ 0°.

7. Système de serrage selon l'une des revendications précédentes, **caractérisé en ce que** les dispositifs de serrage (K₁, K₂) peuvent être actionnés par un fluide, de préférence de l'air comprimé.

8. Système de serrage selon la revendication précédente, **caractérisé en ce que** les éléments de base (B₁, B₂, B₃) comprennent au moins un conduit pour amener le fluide aux dispositifs de serrage (K₁, K₂) destinés à être disposés sur les éléments de base (B₁, B₂, B₃).

9. Système de serrage selon l'une des deux revendications précédentes, **caractérisé en ce que** les dispositifs de serrage (K₁, K₂) comprennent au moins un conduit pour transmettre le fluide aux éléments de base (B₃, B₄) devant être serrés dans les dispositifs de serrage (K₁, K₂).
